# EUROPEAN PATENT SPECIFICATION

(11) **EP 2 020 306 B1**
(45) Date of publication and mention of the grant of the patent: **29.06.2011**
(21) Application number: 07014893.7
(22) Date of filing: 30.07.2007
(51) Int. Cl.: B60B 5/02, B60B 21/02

(54) **Motor bicycle rim and method of making the same**
Motorradfelge und Verfahren zu ihrer Herstellung
Jante de bicyclette à moteur et son procédé de fabrication

(43) Date of publication of application: 04.02.2009
(73) Proprietor: Kunshan Henry Metal Technology Co., Ltd., 215300 Kunshan Jiangsu (CN)
(72) Inventor: Fioravanti, Moreno, 40024 Castel San Pietro Terme (BO) (IT); Tho, Kee Ping, 215300 Kunshan Jiangsu (CN)
(74) Representative: Kirschner, Klaus Dieter

(56) References cited:
- EP-A- 0 368 480
- WO-A-03/045710
- JP-A- 61 071 201
- US-A- 5 246 275

## Description

The invention relates to a motor bicycle rim, and a method of making such a motor bicycle rim.

Historically, motor bicycle rims have been made of metal. While steel is still used, rims can also be made from aluminum alloys or titanium. Several properties of a material help decide whether it is an appropriate material for the construction of a motor bicycle rim. The density or specific gravity of the material is a measure of how light or heavy the material volume is adding to the total weight of the wheel. Stiffness or elastic modulus affect the performance of the wheel. The yield strength determines how much force is needed to permanently deform the material, and this characteristic is important for crash-worthiness. The elongation characteristic determines how much deformity the material allows before cracking which is also important for crash-worthiness. The fatigue limit and endurance limit determines the durability of the rim when subjected to from rotation or street bumps. Such characteristic are to be optimized.

As concerns aluminum alloys, they have lower density and lower strength compared with steel alloys. Aluminum alloys can, however, be used to build a rim that is lighter than steel. Furthermore, aluminum alloy has no substantial fatigue endurance limit; even the smallest repeated stresses will eventually cause failure if repeated enough times. However, alloy technology, good mechanical design and good construction practices help to extend the fatigue life of motor bicycle rims out of aluminum alloy to acceptable lengths. Other attempts to improve the properties of aluminum alloy motor bicycle rims include the shaping of the cross section of the rims for optimizing stiffness.

According to EP 0 368 480, a wheel formed of a rim joined to a hub by a multi-spoke foam structure that is coated with a fiber reinforced resin material. The wheel is defined by particular relationships between the spokes and the radius sections joining the spokes to the hub and the rim.

According to generic JP 2000 108602, to prevent occurrence of concavity at a welded part, which occurs on an outside surface of a rim due to being drawn in by molten metal (filling) swelling into a hollow section when flash butt welding both ends of an annually bent material, without a large weight increase. On this wheel rim, projecting parts and with thickness dimensions which are 2 to 3 times of a standard thickness, are formed on a bead seat part and a bead seat opposite part at roughly the center part in the width direction of a hollow section. In such a case, the projecting parts have top parts positioned so as to face each other and consists of flat surfaces with specified lengths.

JP 2003 326901 serves to provide a tubeless wire spoke wheel having a plurality of wire spokes stretched between a hub and a rim, having good appearance and design, while being able to be made tubeless with an extremely simple structure. A band-shaped ring made of an elastic body such as a rubber is fitted to a drop part of a rim, and adhered to an outer peripheral surface of the drop part with a certain surface pressure. Both sides of the band-shaped ring are fastened by joint rings

It is a purpose of the JP 61071201 A to achieve the lightweight, high strength, and low air resistance of the rim for the wheel in a car for a road race by comprising the rim with hybrid materials consisting of fiber reinforced plastic material and light alloy metal material. For this purpose a nearly heart-shaped rim is formed by being integrated with a hollow light alloy material such as an aluminum alloy and FRP material consisting of high strength and elasticity fiber such as carbon fiber, thermosetting resin such as epoxy resin, and thermoplasic resin such as nylon resin. In this case, the fiber is arranged in the two directions for the longer direction of the rim, that is, at 0 to 20 degrees to reduce the deformation of the rim in the perpendicular direction to the utmost and at 20 to 70 degrees to reduce the twisting deformation. Moreover, the thickness of the light alloy material 4 is set to approximately 0.2 to 2 of the thickness of the FRP material. As a result of this structure, lightweight, high strength, and low air resistance can be attained

It is apparent from the above, that extensive research and development efforts have been made in order to provide a motor bicycle rim which is, on the one hand, light weight and, on the other hand, has the desired mechanical properties mentioned above.

For achieving the above object, a motor bicycle rim comprises the features of claim 1, and the method of the invention comprises the features of claim 9 or 10. Preferred embodiments of the invention are characterized in the sub-claims.

According to the invention, the glass fiber or carbon fiber reinforced resin layer covers basic rim structure out of aluminum alloy on a radially inner surface of the rim and on aside surfaces of the rim, and the glass fiber or carbon fiber reinforced resin layer covers basic rim structure out of aluminum alloy additionally on inner surfaces of flange portions of the rim. This has the effect that the beads of the tire are sitting directly on aluminum which provides a better performance as to air-tightness of a tubeless wheel when the tire is mounted. Furthermore, the nipples for the wire spokes can sit on an aluminum surface so that the nipples may also be sealed of more tightly.

The motor bicycle rim of the invention serves the above object because the best quality of a weight reduced aluminum rim with the stiffness and resistance of the carbon layer provide the desired properties.

As concerns the wheels for motor bicycles, it is important that the wheels are light weight because the wheels have to be accelerated each time the cyclist desires to speed up, and this takes up the more fuel the more heavy the wheels are. Therefore, in the case of motor bicycle wheels, the weight of the wheel is not only a concern as relates to moving a particular mass, but it is also a concern in view of the fuel usage and the CO₂ exhaust gases associated with such acceleration of the motor bicycle. Therefore, reducing weight not only enables a better acceleration of the motor because of less weight, but also reduces the environmental influence by the motor bicycle. Since the rim of the bicycle wheel contributes a major portion of the weight of the total wheel, reducing the weight of the rim advantageously contributes to improve performance and reduce environmental problems associated with motor cycles.

Furthermore, the production of a motor bicycle rim according to the invention is much less cumbersome because the aluminum alloy basic rim structure is used to support the glass fiber or carbon fiber reinforcement material during assembly and curing together with the reinforced resin layer. In other words, putting together a motor bicycle rim only consisting essentially of carbon matrix material, is much more cumbersome because numerous layers and method step have to be taken in order to get to the desired shape of the motor bicycle rim. By combining the aluminum alloy basic rim structure with the glass fiber or carbon fiber reinforced resin layer, it is possible to reduce the rim weight by 30% from a common used triple butted aluminum rim, and, thanks to the combination of the invention, the rigidity of the rim can still be increased by 50%, and its resistance against shocks and breaking is increased by at least 100%.

According to a preferred embodiment of the invention, the aluminum alloy comprises a 6061 or 7005 aluminum alloy. Among the numerous aluminum alloys on the market, it has been found that these aluminum alloys 6061 or 7005 are in particularly suited for the basic rim structure according to the invention because they show the required mechanical characteristics and lend themselves to a good adhesion of the resin layer to the aluminum alloy tubes.

According to a preferred embodiment of the invention, the glass fibers comprise weights (counts) of 200 to 800 tex. Among the numerous glass fibers which can be used as reinforcements of a reinforced resin layer, glass fibers in this tex-range are particularly suited as they show, on the one hand, the desired reinforcement properties and, on the other hand, are easily applied to the structural components of the motor bicycle rim.

According to a preferred embodiment of the invention, the glass fiber reinforcement comprises woven glass fiber fabric. The woven fabric version of the glass fiber reinforcement adds additional stability during the manufacturing of the motor bicycle rim and also during later use.

According to a preferred embodiment of the invention, the carbon fibers comprise one of 3K and 6K and 9K and 12K carbon fibers. This range of carbon fibers has been proven to result in the desired mechanical and operation characteristics, and they are also easily to integrate into the manufacturing process.

According to a preferred embodiment of the invention, the carbon fiber reinforcement comprises woven carbon fiber fabric. As with the glass fiber reinforcement, also the woven fabric version of carbon fibers adds to the mechanical strength and easiness of manufacture.

According to a preferred embodiment of the invention, the resin layer is comprises an epoxy resin, preferably having a cure temperature of 125°C to 180°C, preferably 150°C. Also epoxy resins with different cure temperatures may be used, this kind of epoxy resin is preferred in view of energy saving and smoothness of the manufacturing process. In particular the low cure temperature ensures a curing process that does not produce any cracks and effects.

According to a preferred embodiment of the invention, the finished rim is covered by a lacquer layer for protecting the prepreg material and for decorative purposes.

According to a preferred embodiment of the invention, a method of producing a motor bicycle rim comprises fixing glass fiber or carbon fiber reinforcement material to the basic rim structure out of aluminum alloy, providing a prepreg resin to the basic rim structure having glass fiber or carbon fiber reinforcement material fixed thereto; and curing the prepreg resin together with the glass fiber or carbon fiber reinforcement, and using an adhesive material designed to bond the reinforced prepreg material to the basic rim structure of aluminum alloy. Therein, the glass fiber or carbon fiber reinforced resin layer covers the basic rim structure out of aluminum alloy on a radially inner surface of the rim and on side surfaces of the rim as well as additionally on inner surfaces of flange portions of the rim. The advantageous aspect of the production method is the fact that the reinforcement material can be fixed to the basic rim structure out of aluminum alloy to form a semi fabricated product which has an improved the stability of the bond between the aluminum alloy and the reinforced carbon material and which can easily be cured.

According to a preferred embodiment of the invention, a method of producing a motor bicycle rim comprises fixing glass fiber or carbon fiber reinforced prepreg material to the basic rim structure; and curing the prepreg resin together with the glass fiber or carbon fiber reinforced prepreg material, and using an adhesive material designed to bond the reinforced prepreg material to the basic rim structure of aluminum alloy. Therein, the glass fiber or carbon fiber reinforced resin layer covers the basic rim structure out of aluminum alloy on a radially inner surface of the rim and on side surfaces of the rim as well as additionally on inner surfaces of flange portions of the rim. This facilitated the production process as the prepreg resin is already combined with the fiber material so that the prepreg resin has not to be provided separately from the fiber material. A adhesive materials designed to bond the reinforced prepreg material to the basic rim structure of aluminum alloy are on the market from various manufactures, among others Minnesota Mining and Manufacturing Company, St. Paul, Minnesota, United States. The use of such adhesive materials substantially improves the stability of the bond between the aluminum alloy and the reinforced carbon material.

According to a preferred embodiment of the method of the invention, the curing is carried out in a moulding tool or in an autoclave. The moulding tool which applies the required heat energy to the semi product motor bicycle rim to be cured may be in one peace or may be applied successively to sections of the semi product motor bicycle rim to be cured. It is easy to provide tool at low cost. On the other hand, an autoclave has the advantage that the curing procedure can be shortened.

According to a preferred embodiment of the method of the invention, the curing is carried out at 125°C to 180°C, preferably at 150°C for 30 min. It has been found that such a gentle curing of the motor bicycle rim is advantages in view of avoiding cracks and defects.

According to a preferred embodiment of the invention, the method further comprises trimming and polishing the motor bicycle rim after removal from the moulding tool or the autoclave. Trimming and polishing of the final motor bicycle rim adds to the appearance and also to safety during use as there are no edges or cracks which could cause injuries to the drivers.

According to a preferred embodiment of the method of the invention, the finished rim is covered by a lacquer layer which is curable at 60°C.

Embodiments of the invention are now described with reference to the drawings in which:
Fig. 1 shows a perspective view of a motor bicycle rim of the invention;
Fig. 2 shows a plane view of a motor bicycle rim of the invention; and
Fig. 3 shows a section of the rim of Fig. 1.

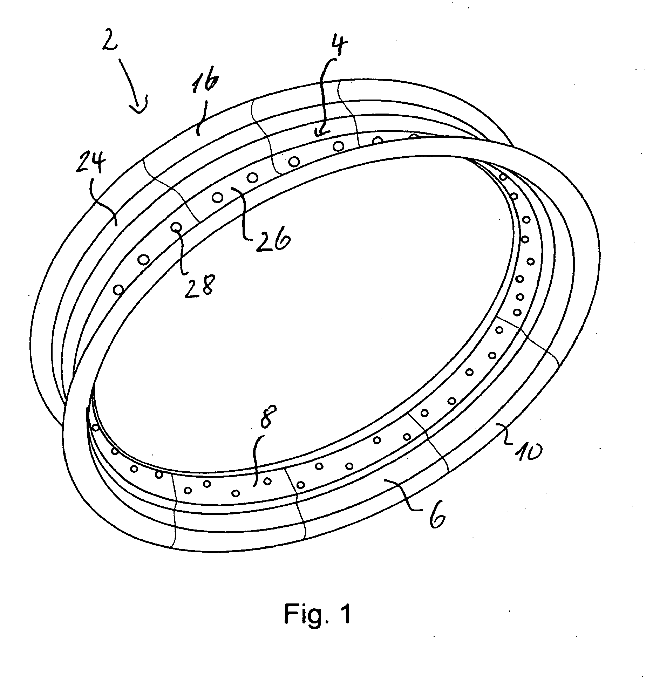

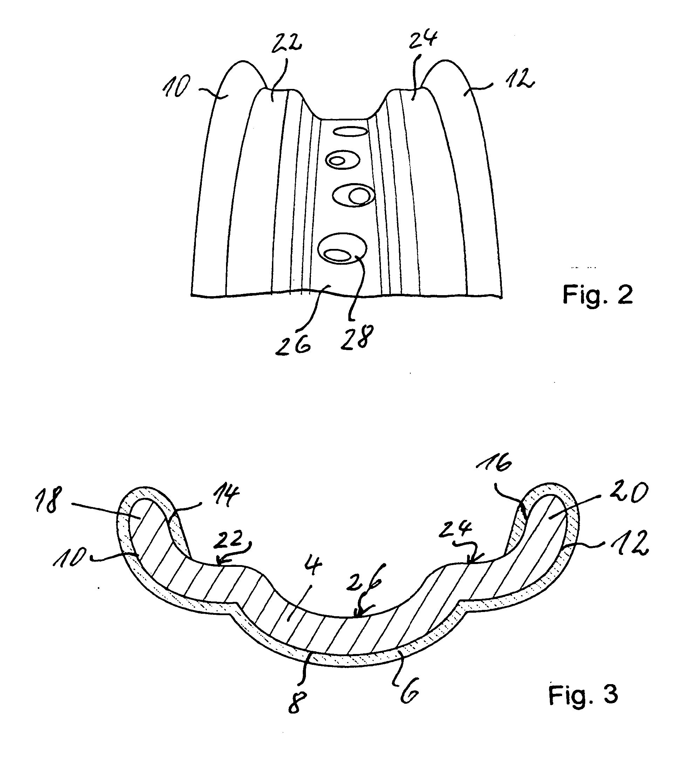

Figs. 1 to 3 show the general outline of a motor bicycle rim 2. The motor bicycle rim 2 consists of an aluminum profile 4 which is coated by a fiber or carbon fiber reinforced resin layer 6, in the following carbon layer 6 which covers a radially inner surface 8 of the rim 2, side surfaces 10, 12 of the rim 2 and inner sides 14, 16 of flanges 18, 20 of the rim 2. The aluminum profile 4 of the rim 2 has seats 22, 24 for the inner beads of a tire (not shown), and a base portion 26 in between the seat portions 22, 24. The base portion 26 comprises holes 28 (see Figs. 1 and 2) which are provided for inserting the nipples for wire spokes.

As can be seen from Figs. 1 and 2, the seat portion 22, 24 and the bottom portion 26 are not covered by a carbon layer at the side of the rim adjacent the tire (not shown). This has the effect that the beads of the tire are sitting directly on aluminum which provides a better performance as to air-tightness of the wheel when the tire is mounted. Furthermore, the nipples (not shown) for the wire spokes can sit on an aluminum surface which is also preferred over a seat on a non-metal material which means that the holes 28 for the nipples may also be sealed of more tightly.

It should be understood that the invention is not restricted to the shape of the rim 2 as shown in the figures, but that the invention may also be applied to so called chamber rims which contain air chambers in a circumferential direction within the metal part of the rim in order to further reduce the weight of the rim.

In preferred embodiments of the invention, aluminum alloys 6061 consisting or 7005 according to DIN EN 573.3. Furthermore, glass fibers comprising weights of 200 to 800 tex, carbon fibers in the range of 3K, 6K, 9K and 12K, and the epoxy resin having a curing temperature of 125°C to 180°C, preferably 150°C, are used in preferred embodiments of the invention. In the most preferred embodiment, the glass fiber reinforcement or carbon fiber reinforcement layer is in the form of a woven fabric out of the fibers mentioned.

In order to produce the motor bicycle rim according to the invention, glass fiber or carbon fiber reinforcement material is fixed to the basic rim structure out of aluminum alloy. To this end, an adhesive material designed to bond fibrous material to the basic rim structure of aluminum alloy is used. After fixing the glass fiber or carbon fiber reinforcement material to the basic rim structure, a prepreg resin is provided to the thus prepared semi product basic rim structure having glass fiber or carbon fiber reinforcement material fixed thereto, and, thereafter, the prepreg resin together with the glass fiber or carbon fiber reinforcement is cured.

In order to produce the motor bicycle rim in an alternative method of the invention, glass fiber or carbon fiber reinforced prepreg material is fixed to the basic rim structure out of aluminum alloy. To this end, an adhesive material designed to bond the prepreg material to the basic rim structure of aluminum alloy is used. After fixing the prepreg material to the basic rim structure, the thus prepared semi product basic rim structure having prepreg material fixed thereto is cured.

In both methods the curing is carried out in a moulding tool or in an autoclave, wherein the curing is carried out at 125°C to 180°C, preferably 150°C, for 30 min. After curing and removal from the moulding tool or the autoclave, the motor bicycle rim is trimmed and polished.

## Claims

1. Motor bicycle rim (2) comprising a basic rim structure (4) out of aluminum alloy which basic rim structure (4) has a base portion (26) between seat portions (22,24) for beads of a tire, flange portions (18,20) and a radially inner surface (8) wherein the base portion (26) has holes (28) for inserting nipples for wire spokes,
**characterized in that**
the basic rim structure (4) is covered at least in part by a glass fiber or carbon fiber reinforced resin layer adapted to the use of an adhesive material designed to bond the reinforced prepreg material to the basic rim structure (4) of aluminum alloy, and that
the glass fiber or carbon fiber reinforced resin layer covers the basic rim structure (4) out of aluminum alloy on a radially inner surface (8) of the rim (2) and on side surfaces (10,12) of the rim (2) as well as additionally on inner surfaces (14, 16) of flange portions (18, 20) of the rim, the seat portions (22,24) and the base portion (26) being not covered by a carbon layer at the side of the rim adjacent the tire..

2. The motor bicycle rim (2) of claim 1, wherein the aluminum alloy comprises an 6061 or 7005 aluminum alloy.

3. The motor bicycle rim (2) of claim 1, wherein the glass fibers comprise weights (counts) of 200 to 800 tex.

4. The motor bicycle rim (2) of claim 3, wherein the glass fiber reinforcement comprises woven glass fiber fabric.

5. The motor bicycle rim (2) of claim 1, wherein the carbon fibers comprise one of 3K and 6K and 9K and 12K carbon fibers.

6. The motor bicycle rim (2) of claim 3, wherein the carbon fiber reinforcement comprises woven carbon fiber fabric.

7. The motor bicycle rim (2) of claim 1, wherein the resin layer is comprises an epoxy resin, preferably having a cure temperature of 125°C to 180°C, preferably 150°C.

8. The motor bicycle rim (2) of claim 1, wherein the finished rim is covered by a lacquer layer.

9. A method of producing a motor bicycle rim (2) of claim 1, comprising:
fixing glass fiber or carbon fiber reinforcement material to the basic rim structure (4) out of aluminum alloy,
providing a prepreg resin to the basic rim structure (4) having glass fiber or carbon fiber reinforcement material fixed thereto;
using an adhesive material designed to bond the reinforced prepreg material to the basic rim structure (4) of aluminum alloy,
curing the prepreg resin together with the glass fiber or carbon fiber reinforcement, and
**characterized in that**
the glass fiber or carbon fiber reinforced resin layer is fixed to cover the basic rim structure (4) out of aluminum alloy on a radially inner surface (8) of the rim (2) and on side surfaces (10, 12) of the rim (2) and additionally on inner surfaces (14, 16) of flange portions (18, 20) of the rim (2).

10. A method of producing a motor bicycle rim (2) of claim 1, comprising:
fixing glass fiber or carbon fiber reinforcement prepreg material to the basic rim structure (4) out of aluminum alloy,
using an adhesive material designed to bond the reinforced prepreg material to the basic rim structure (4) of aluminum alloy, and
curing the prepreg resin together with the glass fiber or carbon fiber reinforcement,
**characterized in that**
the glass fiber or carbon fiber reinforced resin layer is fixed to cover the basic rim structure (4) out of aluminum alloy on a radially inner surface (8) of the rim (2) and on side surfaces (10, 12) of the rim (2) and additionally on inner surfaces (14, 16) of flange portions (18, 20) of the rim (2).

11. The method of claim 9 or 10, wherein the curing is carried out in a moulding tool or in an autoclave.

12. The method of claim 9, 10 or 11, wherein the curing is carried out at 125°C to 180°C, preferably 150°C, for 30 min.

13. The method of claim 9 or 10, further comprising trimming and polishing the motor bicycle rim (2) after removal from the moulding tool or the autoclave.

14. The method of any of the claims 9 to 13, wherein the finished rim is covered by a lacquer layer which is curable at 60°C.

## Patentansprüche

1. Motorradfelge (2) umfassend eine Basis-Felgenstruktur (4) aus Aluminiumlegierung, wobei die Basis-Felgenstruktur (4) einen Basisabschnitt (27) zwischen Sitzabschnitten (22, 24) für Wulste eines Reifens, Flanschabschnitte (18, 20) und eine radial innenliegende Oberfläche (8) aufweist, wobei der Basisabschnitt (26) Öffnungen (28) hat, um Nippel für Drahtspeichen einzuführen,
**dadurch gekennzeichnet, dass**
die Basis-Felgenstruktur (4) wenigstens teilweise durch eine Glasfaser- oder Carbonfaser-verstärkte Harzschicht überdeckt ist, die auf die Verwendung eines Klebstoffmaterials angepasst ist, das ausgelegt ist, um das verstärkte Prepreg-Material an der Basis-Felgenstruktur (4) aus Aluminiumlegierung zu befestigen, und dass die Glasfaser- oder Carbonfaser-verstärkte Harzschicht die Basis-Felgenstruktur (4) aus Aluminiumlegierung auf einer radial innenliegenden Oberfläche (8) der Felge (2) und auf Seitenflächen (10, 12) der Felge (2) und zusätzlich auf Innenflächen (14, 16) von Flanschabschnitten (18, 20) der Felge überdeckt, wobei die Sitzabschnitte (22, 24) und der Basisabschnitt (26) nicht mit einer Carbonschicht an der Seite der Felge angrenzend an den Reifen überdeckt.

2. Motorradfelge (2) nach Anspruch 1, worin die Aluminiumlegierung eine 6061 oder 7005 Aluminiumlegierung aufweist.

3. Motorradfelge (2) nach Anspruch 1, worin die Glasfasern Gewichts(-zahlen) von 200 bis 800 tex aufweisen.

4. Motorradfelge (2) nach Anspruch 3, worin die Glasfaserverstärkung einen gewebten Glasfaserstoff aufweist.

5. Motorradfelge (2) nach Anspruch 1, worin die Glasfasern eine aus 3K und 6K und 9K und 12K Carbonfasern aufweisen.

6. Motorradfelge (2) nach Anspruch 3, worin die Carbonfaserverstärkung einen gewebten Carbonfaserstoff aufweist.

7. Motorradfelge (2) nach Anspruch 1, worin die Harzschicht ein Epoxyharz aufweist, das vorzugsweise eine Aushärtungstemperatur von 125 °C bis 180 °C, vorzugsweise 150°C, hat.

8. Motorradfelge (2) nach Anspruch 1, worin die fertige Felge mit einer Lackschicht überdeckt ist.

9. Verfahren zur Herstellung einer Motorradfelge (2) nach Anspruch 1, umfassend:
Befestigen von Glasfaser- oder Carbonfaserverstärkungsmaterial an der Basis-Felgenstruktur (4) aus Aluminiumlegierung,
Anbringen eines Prepreg-Harzes an der Basis-Felgenstruktur (4) an dem Glasfaser- oder Carbonfaser-Verstärkungsmaterial befestigt ist;
Verwendung eines Klebstoffmaterials, das ausgelegt ist, um das verstärkte Prepreg-Material an der Basis-Felgenstruktur (4) aus Aluminiumlegierung zu befestigen,
Aushärten des Prepreg-Harzes zusammen mit der Glasfaser- oder Carbonfaserverstärkung,
**dadurch gekennzeichnet, dass**
die Glasfaser- oder Carbonfaser-verstärkte Kunststoffschicht befestigt wird, um die Basis-Felgenstruktur (4) aus Aluminiumlegierung auf einer radial inneren Oberfläche (8) der Felge (2) und auf Seitenflächen (10, 12) der Felge (2) und zusätzlich auf Innenflächen (14, 16) von Flanschabschnitten (18, 20) der Felge (2) zu befestigen.

10. Verfahren zur Herstellung einer Motorradfelge (2) nach Anspruch 1, umfassend:
Befestigen von Glasfaser- oder Carbonfaser-verstärktem Prepreg-Material auf der Basis-Felgenstruktur (4) aus Aluminiumlegierung,
Verwenden eines Klebstoffmaterials, das ausgelegt ist, um das verstärkte Prepreg-Material an der Basis-Felgenstruktur (4) aus Aluminiumlegierung zu befestigen, und
Aushärten des Prepreg-Harzes zusammen mit der Glasfaser- oder Carbonfaserverstärkung,
**dadurch gekennzeichnet, dass**
die Glasfaser- oder Carbonfaser-verstärkte Kunststoffschicht befestigt wird, um die Basis-Felgenstruktur (4) aus Aluminiumlegierung auf einer radial innenliegenden Fläche (8) der Felge (2) und auf Seitenflächen (10, 12) der Felge (2) und zusätzlich auf Innenflächen (14, 16) von Flanschabschnitten (18, 20) der Felge (2) zu befestigen.

11. Verfahren nach Anspruch 9 oder 10, worin das Aushärten in einem Gusswerkzeug oder in einem Autoklaven ausgeführt wird.

12. Verfahren nach Anspruch 9, 10 oder 11, worin das Aushärten bei 125 °C bis 180 °C, vorzugsweise bei 150 °C, während 30 Minuten ausgeführt wird.

13. Verfahren nach Anspruch 9 oder 10,ferner umfassend das Trimmen und Polieren der Motorradfelge (2) nach dem Herausnehmen aus dem Gusswerkzeug oder dem Autoklaven.

14. Verfahren nach einem der Ansprüche 9 bis 13, worin die fertige Felge mit einer Lackschicht überdeckt wird, die bei 60°C aushärtbar ist.

## Revendications

1. Jante de bicyclette à moteur (2) comprenant une structure de base de jante (4) en dehors de l'alliage d'aluminium laquelle structure de base de jante (4) a une partie de base (26) entre les parties de position (22, 24) pour les talons d'un pneu, les parties de bride (18, 20) et une surface radialement intérieure (8) où la portion de base (26) présente les trous (28) pour insérer les raccords pour les rayons de fil, **caractérisée en ce que**
- la structure de base de jante (4) est couverte au moins en partie par une couche de résine renforcée par fibre de verre ou fibre de carbone adaptée à l'utilisation d'un adhésif désigné pour lier le matériau pré- imprégné renforcé à la structure de base de jante (4) d'alliage d'aluminium, et que
- la couche de résine renforcée par fibre de verre ou fibre de carbone couvre la structure de base de jante (4) en dehors de l'alliage d'aluminium sur une surface radialement intérieure (8) de la jante (2) et sur les surfaces latérales (10, 12) de la jante (2) ainsi que de plus sur les surfaces intérieures (14, 16) des parties de bride (18, 20) de la jante, les parties de position (22, 24) et la partie de base (26) n'étant pas couvertes par une couche de carbone au côté de la jante adjacente au pneu.

2. Jante de bicyclette à moteur (2) selon la revendication 1, où l'alliage d'aluminium comprend un alliage d'aluminium 6061 ou 7005.

3. Jante de bicyclette à moteur (2) selon la revendication 1, où les fibres de verre comprennent poids (valeurs) de 200 à 800 tex.

4. Jante de bicyclette à moteur (2) selon la revendication 3, où le renforcement de fibre de verre comprend un produit de fibres de verre tissé.

5. Jante de bicyclette à moteur (2) selon la revendication 1, où les fibres de carbone comprennent l'une des fibres de carbone de 3K et 6K et 9k et 12K.

6. Jante de bicyclette à moteur (2) selon la revendication 3, où le renforcement de fibre de carbone comprend un produit de fibres de carbone tissé.

7. Jante de bicyclette à moteur (2) selon la revendication 1, où la couche de résine comprend une résine époxy, ayant préférablement une température de durcissement de 125°C à 180°C, préférablement 150°C.

8. Jante de bicyclette à moteur (2) selon la revendication 1, où la jante finie est couverte par une couche de vernis.

9. Procédé de fabrication d'une jante de bicyclette à moteur (2) selon la revendication 1, comprenant :
- fixer le matériau de renforcement de fibre de verre ou fibre de carbone à la structure de base de jante (4) en dehors de l'alliage d'aluminium,
- pourvoir une résine pré- imprégnée à la structure de base de jante (4) ayant le matériau de renforcement de fibre de verre ou fibre de carbone y fixé,
- utiliser un adhésif désigné pour lier le matériau pré- imprégné renforcé à la structure de base de jante (4) d'alliage d'aluminium,
- traiter la résine pré- imprégnée de pair avec le renforcement de fibre de verre ou fibre de carbone, et
**caractérisé en ce que**
- la couche de résine renforcée par fibre de verre ou fibre de carbone est fixée pour couvrir la structure de base de jante (4) en dehors de l'alliage d'aluminium sur une surface radialement intérieure (8) de la jante (2) et sur les surfaces latérales (10, 12) de la jante (2) ainsi que de plus sur les surfaces intérieures (14, 16) des parties de bride (18, 20) de la jante (2).

10. Procédé de fabrication d'une jante de bicyclette à moteur (2) selon la revendication 1, comprenant:
- fixer le matériau de renforcement pré- imprégné de fibre de verre ou fibre de carbone à la structure de base de jante (4) en dehors de l'alliage d'aluminium,
- utiliser un adhésif désigné pour lier le matériau pré- imprégné renforcé à la structure de base de jante (4) d'alliage d'aluminium,
- traiter la résine pré- imprégnée de pair avec le renforcement de fibre de verre ou fibre de carbone,
**caractérisé en ce que**
- la couche de résine renforcée par fibre de verre ou fibre de carbone est fixée pour couvrir la structure de base de jante (4) en dehors de l'alliage d'aluminium sur une surface radialement intérieure (8) de la jante (2) et sur les surfaces latérales (10, 12) de la jante (2) et de plus sur les surfaces intérieures (14, 16) des parties de bride (18, 20) de la jante (2).

11. Procédé selon la revendication 9 ou 10, où le traitement est réalisé dans un outil de moulage ou dans une autoclave.

12. Procédé selon la revendication 9, 10 ou 11, où le traitement est réalisé à 125 °C à 180 °C, préférablement 150 °C, pour 30 min.

13. Procédé selon la revendication 9 ou 10, comprenant de plus l'ébarbage et le polissage de la jante de bicyclette à moteur (2) après l'éloignement de l'outil de moulage ou de l'autoclave.

14. Procédé selon la revendication 9 à 13, où la jante finie est couverte par une couche de vernis qui est appliquée à 60°C.
